# EUROPEAN PATENT APPLICATION

(11) **EP 4 465 312 A1**
(43) Date of publication of application: **20.11.2024**
(21) Application number: 23173585.3
(22) Date of filing: 16.05.2023
(51) Int. Cl.: H01F 7/02, H01F 7/06, H01F 7/127, H01F 7/16, B06B 1/04, G06F 3/01, H02K 33/02, H02K 33/16, H04R 11/00

(54) **METHOD OF MANUFACTURING AN ACTUATOR**

(71) Applicant: Grewus GmbH, 22335 Hamburg (DE)
(72) Inventor: Bojskov Rothmann, Morten, 6440 Augustenborg (DK); Santella, Daniel, 23866 Nahe (DE); Sandomeer, Ralf, 22159 Hamburg (DE)
(74) Representative: Hoffmann Eitle

(57) **Abstract**

A method of manufacturing an actuator comprising a coil, a magnet and a spring, the method comprising the steps of: modelling one or more parameters of at least one of the coil, the magnet and the spring based on at least one predetermined characteristic of the actuator; assembling the coil, the magnet and the spring in accordance with the one or more parameters; providing a sheet metal housing comprising at least one contact part and at least one bending part adjacent to the at least one contact part; attaching the coil to the sheet metal housing; attaching a printed circuit board to the sheet metal housing; attaching the magnet to a bottom surface of the spring; placing the spring on the at least one contact part of the sheet metal housing; and bending the at least one bending part onto a portion of the spring that rests on the at least one contact part of the sheet metal housing.

## Description

### Technical Field

The present invention relates to an actuator, in particular to a method of manufacturing an actuator. The present invention can for example find an application in the context of operation surfaces, as e.g., common in many fields including mobile devices, smartphones, automotive dashboards, touch screens, consumer products, etc.

### Technical Background

Actuators, among them also voice-coil actuators for haptic feedback (also called "exciters"), are included in many, if not all, modern products to be used by a user. Specific examples are touch displays and smart surfaces. Apart smartphones whose operation almost exclusively works by means of such a touch display, touch displays are also present in many other consumer products such as washing machines, cars, refrigerators, etc. Moreover, in many cases, these displays are not only able to receive input from the user but also able to output active haptic feedback back to the user, for example to confirm that an input has been received or a certain action has been performed. These types of surfaces are called "active haptic surfaces" as they provide an active haptic signal to the user, in particular in response to the user providing an input to the application, e.g., by touching the surface.

For the implementation of active haptic surfaces, exciters are an often-used solution as they can generate multispectral vibration depending on the operating situation. An exciter in the context of the present disclosure can be understood as a voice-coil actuator with an elastic suspension between a magnetic circuit and a coil.

Two relevant functional parameters of an actuator are the resonant frequency of the actuator and the acceleration of the actuator. To reduce costs, production of actuators very often is only made within very limited configuration possibilities. Specifically, currently available actuators are specified on a component basis with regard to these technological parameters, resonant frequency and acceleration. This type of design cannot take into account if a change in these parameters in actual installation situations in specific application is desired.

Therefore, there is a need for a method of manufacturing an actuator is flexible with respect to requirements of a particular application and allows to adjust technological parameters based on the requirements of the application.

### Summary

The above problems are solved by the subject-matter of the independent claims. Further preferred embodiments are given by the subject-matter of the dependent claims.

According to an embodiment of the present invention, there is provided a method of manufacturing an actuator comprising a coil, a magnet and a spring, the method comprising the steps of: modelling one or more parameters of at least one of the coil, the magnet and the spring based on at least one predetermined characteristic of the actuator; assembling the coil, the magnet and the spring in accordance with the one or more parameters; providing a sheet metal housing comprising at least one contact part and at least one bending part adjacent to the at least one contact part; attaching the coil to the sheet metal housing; attaching a printed circuit board to the sheet metal housing; attaching the magnet to a bottom surface of the spring; placing the spring on the at least one contact part of the sheet metal housing; and bending the at least one bending part onto a portion of the spring that rests on the at least one contact part of the sheet metal housing.

According to a further embodiment, there is provided an actuator manufactured according to the above method.

### Brief description of the drawings

Embodiments of the present invention, which are presented for better understanding the inventive concepts, but which are not to be seen as limiting the invention, will now be described with reference to the figures in which:
- Figure 1: shows a schematic exploded view of an actuator manufactured by a method according to an embodiment of the present invention;
- Figure 2: shows a schematic exploded sideview of an actuator manufactured by a method according to an embodiment of the present invention;
- Figure 3: shows a flowchart of a method according to an embodiment of the present invention;
- Figure 4: shows a schematic top view of an actuator manufactured by a method according to an embodiment of the present invention;
- Figure 5: shows a schematic side view of an actuator manufactured by a method according to an embodiment of the present invention; and
- Figure 6: shows a schematic top view of an actuator manufactured by a method according to an embodiment of the present invention.

### Detailed Description

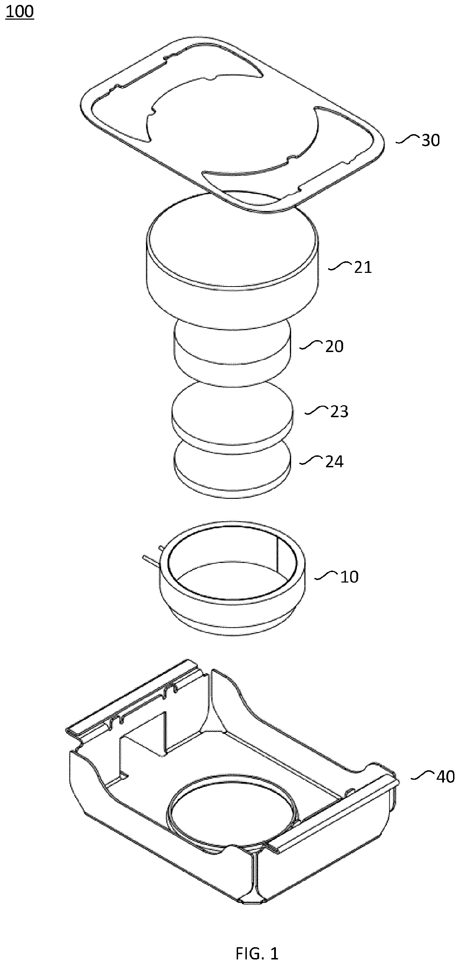

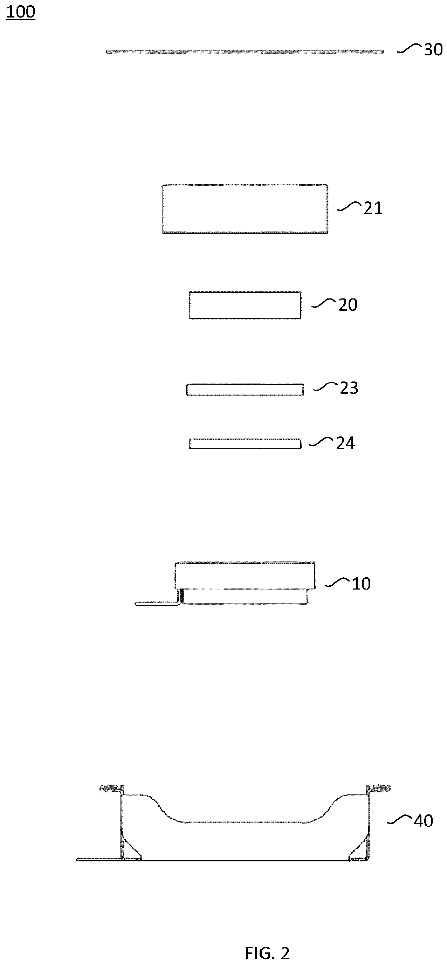

Figure 1 shows a schematic exploded view of an actuator 100 manufactured by a method according to an embodiment of the present invention. Figure 2 shows a schematic exploded sideview of the same actuator manufactured by a method according to an embodiment of the present invention and accordingly the below description and explanations apply to both figures equally.

This actuator 100 comprises a coil 10, a magnet 20 and a spring 30 as functional components as well as a housing 40, preferably made out of sheet metal, that is, a sheet metal housing.

The coil 10 may further comprise a wire, and preferably also a core. In this case, the wire may be wound around the core. This may be understood as forming coil 10.

The coil 10 may further comprise a coil former 11 as shown in Figure 1. In this case, the wire may be wound around the coil former 11 and the core may be provided inside the coil former 11.

The magnet 20 may further comprise a magnet cup 21, and preferably also a main magnet 22, a pole piece 23 and/or an auxiliary magnet 24. Herein, magnet is to be understood as synonymously as "permanent magnet".

The thickness of the wall (wall thickness) of the magnet cup 21 may be variable. This may allow to adjust the wall thickness of the magnet cup 21 in accordance with requirements regarding the actuator 100, for example regarding the functional parameters of the actuator 100, specifically the acceleration. This may in particular due to the change in the wall thickness of the magnet cup 21 influencing the overall mass of the magnet 20, hence the oscillating mass of the actuator 100.

This design of the magnet 20 including various elements is directed at the directing and amplifying the magnetic field of the magnet within the actuator 100. For example, the magnetic field, the saturation and the layout of the pole piece 23, but also the properties of the remaining elements of the magnet 20, may have an influence on the force exerted by the magnet 20 onto the spring 30 and/or the stroke of the magnet 20.

The spring 30 may have a variable geometry. This may allow to adjust the geometry of the spring 30 in accordance with requirements regarding the actuator 100, for example regarding the functional parameters of the actuator 100, specifically the resonant frequency.

The spring 30 may be made of sheet metal. This allows, in particular when also the housing 40 is made of sheet metal, to reduce the number of different materials required for manufacturing the actuator 100. This is further emphasized by the fact that in this case both elements, the spring 30 and the housing 40, can be made with the same or substantially the same process steps and with the same or substantially the same devices. Further details on this will be provided elsewhere in this document.

The housing 40 may comprise at least one contact part 41 and may comprise at least one bending part 42, which may be adjacent to the contact part 41. For example, two contacts parts 41 with two adjacent bending parts 42 may be provided on opposite sides of the housing 40.

The at least one contact part 41 and the at least one bending part 42 may serve to fixate the spring 30 onto the housing 40. This may be achieved by placing the spring 30 on the at least one contact part 41 of the housing 40 and then bending the at least one bending part onto a portion of the spring 30 that rests on the at least one contact part 42 of the housing.

In the following, the function of the actuator 100, in particular how a haptic signal can be provided by the actuator 100, will be explained.

The underlying physical concept is that of the Lorentz force, specifically the aspect that elements with charge, such as a magnet, experience a force in an electric field.

By energizing the coil 10, specifically a wire comprised in the coil 10, an electric field is generated. This electric field exerts a force on the magnet 20, specifically on the main magnet 22 and the auxiliary magnet 24, if comprised in the magnet 20. As a result, the magnet 20 moves and the magnet 20 sets the spring 30 in vibration as the two come into contact. Please note that, that the magnet 20 and the spring 30 may or may not be in contact already before the coil 10 is energized. The vibration of the spring 30 may constitute the haptic signal and/or haptic feedback provided by the actuator 100. This haptic signal and/or haptic feedback may be forwarded or redirected to an application surface at which the actuator 100 is provide or to which the actuator 100 is fixated.

A printed circuit board (PCB, not shown in Figure 1) may be provided in the actuator 100 as well. For example, the printed circuit board may be provided on the housing 40, for example attached to the housing 40. Preferably, it may be attached to a bottom surface of the housing 40, further preferably inside the housing 40 of the actuator 100.

The printed circuit board may contain control elements, for example a control circuit, that controls the process of energizing the coil 10, thereby controlling the force exerted onto the magnet 20 and in consequence controlling the haptic feedback and/or haptic signal provided by the spring 30. It may thus be said that the printed circuit board controls the haptic feedback and/or haptic signal.

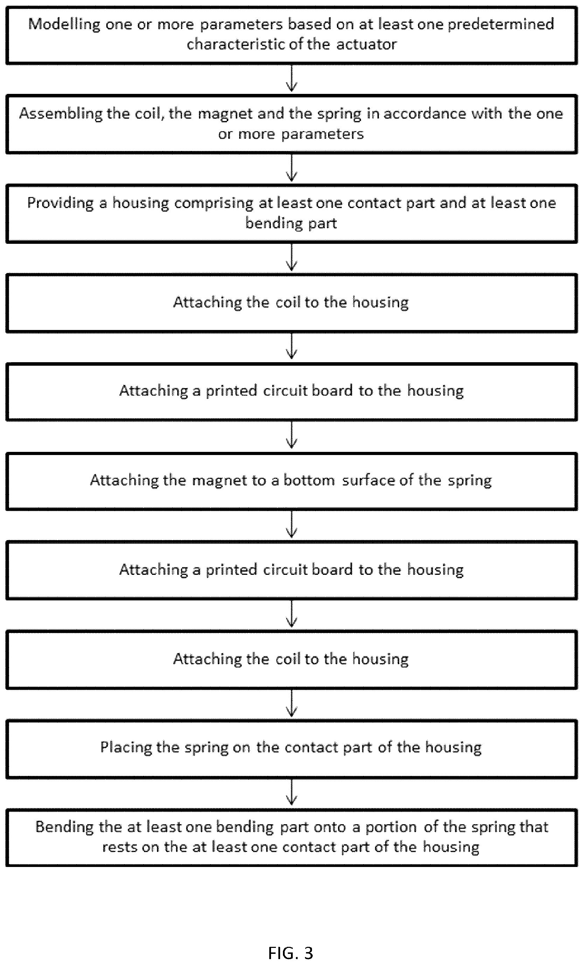

Figure 3 shows a flowchart of a method according to an embodiment of the present invention.

The method of manufacturing an actuator 100 comprising a coil 10, a magnet 20 and a spring 30 comprises the steps of: modelling one or more parameters of at least one of the coil 10, the magnet 20 and the spring 30 based on at least one predetermined characteristic of the actuator 100; assembling the coil 10, the magnet 20 and the spring 30 in accordance with the one or more parameters; providing a sheet metal housing 40 comprising at least one contact part 41 and at least one bending part 42 adjacent to the at least one contact part 41; attaching the coil 10 to the sheet metal housing 40; attaching a printed circuit board to the sheet metal housing 40; attaching the magnet 20 to a bottom surface of the spring 30; placing the spring 30 on the at least one contact part 41 of the sheet metal housing 40; and bending the at least one bending part 42 onto a portion of the spring 30 that rests on the at least one contact part 41 of the sheet metal housing 40.

The step of modelling one or more parameters of at least one of the coil 10, the magnet 20 and the spring 30 based on at least one predetermined characteristic of the actuator 100 may for example entail one of the following:
A parameter of the coil 10 may be modelled based on a predetermined characteristic of the actuator 100. Specifically, the winding number of the wire of the coil 10 and/or the resistance of the wire of the coil 10 may be varied. This may influence the electric field created when the coil 10 is energized and hence may influence the properties of the actuator 100. In particular, this may influence the acceleration of the actuator 100.

Further parameters of the coil 10 may be parameters of the core and/or of the coil former 11. These may be subject to adjustments based on the above modelling as well. In a preferred embodiment, these parameters remain constant, i.e., the method of manufacturing an actuator 100 is carried out with a fixed core and/or fixed coil former 11. This may simplify the manufacturing process and reduce costs of the same.

A parameter of the magnet 20 may be modelled based on a predetermined characteristic of the actuator 100. Specifically, the wall thickness of the magnet cup 21 of the magnet 20 may be varied. This may influence the mass of the magnet 20 and hence the properties of the actuator 100, in particular the acceleration of the actuator 100.

Further parameters of the magnet 20 may be parameters of the main magnet 22, the pole piece 23 and/or the auxiliary magnet 24. These may be subject to adjustments based on the above modelling as well. In a preferred embodiment, these parameters remain constant, i.e., the method of manufacturing an actuator 100 is carried out with a fixed main magnet 22, a fixed pole piece 23, and a fixed auxiliary magnet 24, if comprised in the magnet 20. This may simplify the manufacturing process and reduce costs of the same.

A parameter of the spring 30 may be modelled based on a predetermined characteristic of the actuator 100. Specifically, the geometry of the spring may be varied. This geometry is a very flexible degree of freedom, that is, the geometry can take various forms and shapes.

The only requirements to the geometry may be that the spring 30 has a contact surface for contact with the magnet 20, preferably the magnet cup 21 of the magnet 20, and that the spring 30 can be placed on the at least one contact part 41 of the housing 40 such that bending the at least one bending part 41 onto a portion of the spring 30 resting on the at least one contact part 41 of the housing 40 is possible, preferably is possible to an extent that fixates the spring 30 onto the housing 40, thereby concluding the manufacturing of the actuator 100 as discussed within the present document.

The choice of geometry of the spring 30 may influence the spring constant of the spring 30, thereby and hence the properties of the actuator 100, in particular the resonant frequency of the actuator 100.

Further parameters of the spring 30 may be the material and/or thickness of the spring 30. These may be subject to adjustments based on the above modelling as well. In a preferred embodiment, these parameters remain constant, i.e., the method of manufacturing an actuator 100 is carried out with only the geometry of the spring 30 being modelled and adjusted. This may simplify the manufacturing process and reduce costs of the same.

In a preferred embodiment, the modelling combines the three aspects above and hence the number of windings of the wire of the coil 10 as well as the resistance of the wire of the coil 10, the wall thickness of the magnet cup 21 of the magnet 20 and the geometry of the spring 30 are the only parameters that are modelled and adjusted while the remaining parameters of these elements and preferably also the actuator 100 as a whole remain constant. In this preferred embodiment the parameters discussed above, namely resonant frequency and acceleration of the actuator 100, can be modelled and adjusted and hence a complete range of the functional parameters of the actuator 100 can be achieved while modelling and adjusting only a small set of parameters. As a result, a configuration of an actuator 100 fitting to the particular requirements of virtually any application can be provided while at the same time keeping the manufacturing process simple and the reduce costs of the same low.

In addition, it is noted that the step of modelling may be based on simulations of the actuators and its properties and characteristics based on physical models.

In the step of assembling the coil 10, the magnet 20 and the spring 30 in accordance with the one or more parameters, these elements are assembled in line with established practice in the field of manufacturing actuators.

In an example, after the number of windings of the wire and the resistance of the wire are chosen, preferably according to the modelling of the above step, the coil 10 is assembled using the wire and, if comprised in the coil 10, the core and/or the core former 11.

In a further example, after the wall thickness of the magnet cup 21 o the magnet 20 is chosen, preferably according to the modelling of the above step, the magnet 20 is assembled using the magnet cup 21, the main magnet 22, and, if comprising in the magnet 20, the pole piece 23 and/or the auxiliary magnet 24.
In another example, after the geometry of the spring 30 is chose, preferably according to the modelling of the above step, the spring 30 is assembled, for example, if the spring 30 is made of sheet metal, by stamping a sheet metal strip into the spring 30.

As regards the step of providing the housing 40 comprising at least one contact part 41 and at least one bending part 42 adjacent to the at least one contact part 41, in a preferred embodiment of the present invention, this may be proceeded by the steps of forming the housing 40, which in the case of sheet metal housing may comprise the steps of providing a sheet metal strip; stamping the sheet metal strip into a sheet metal blank; and bending the sheet metal blank into the sheet metal housing 40.

In the step of attaching the coil 10 to the housing 40, in a preferred embodiment of the present invention, the coil 10 may be glued to the housing 40. It is noted that the present invention should however not be understood to be limited to this and other methods of attaching the coil 10 to the housing 40.

In a further preferred embodiment of the present invention, a connecting wire of the coil 10 may be soldered to the printed circuit board.

In the step of attaching the printed circuit board to the housing 40, in a preferred embodiment of the present invention, the printed circuit board may be glued to the housing 40.

In a further preferred embodiment of the present invention, the printed circuit board may be attached to the bottom surface of the housing 40.

In the step of attaching the magnet 20 to a bottom surface of the spring 30, in a preferred embodiment of the present invention, the magnet 20 may be attached to the bottom surface of the spring 30 by pressing or soldering.

Further, the steps of placing the spring 30 on the at least one contact part 41 of the sheet metal housing 40 and bending the at least one bending part 42 onto a portion of the spring 30 that rests on the at least one contact part 41 of the sheet metal housing 40 may be implemented in various way, in particular depending on the number of the at least one contact part 41 and the at least one bending part 42.

As discussed elsewhere in this document and as shown in the figures, specifically as can be seen in Figures 1, 3 and 4, a configuration with two contact parts 41 and two bending parts 42 may be advantageous. However, the present disclosure is not limited thereto.

For example, in an example of the present invention, there may only be one contact part 41 and only one bending part 42. In such an example, the spring may be clicked into place at one end of the housing 40 and then placed on the single contact part 41 on the other end of the housing 40 and subsequently the bending part is bent there.

Alternatively, an example of the present invention may have three or more contact parts 41 and three or more bending parts 42. Moreover, the number of contact parts 41 and the number of bending parts 42 may not be the same, there might be contact parts 41 without bending parts. For example, in a scenario with four contact parts 41, only three bending parts 42 may be provided. This allows proper placing of the spring 30 on the housing 40 and proper fixating of the spring 30 using the three bending parts 42 but saves the costs for the fourth bending part 42.

Furthermore, it is also conceivable, in particular when both the spring 30 and the housing 40 are made of the same material, such as a sheet metal, that the spring 30 and housing 40 are manufactured as one element. In this case, the final step would not comprise placing the spring 30 on the housing 40, but rather bending the spring 30 onto the housing 40 and then bending the at least one bending part 42 onto a portion of the spring 30 that rests on the at least one contact part 41 of the sheet metal housing 40.

As mentioned above and also mentioned elsewhere in this document, the method of manufacturing may be applied to a spring 30 made of sheet metal.

Further, as can be understood from Figures 1, 2 and 4-6, the housing may comprise a bottom surface and four side surfaces attached to the bottom surface. In this case, the at least one contact part 41 is attached to one of the side surfaces. It is however noted that the present invention is not limited to this angular or rectangular shape and instead other shapes or forms may be used as well.

In addition, as also discussed elsewhere in this document, in a preferred embodiment of the present invention, the coil 30 comprises a wire and preferably further comprises a core. In this case, the one or more parameters may include a winding number of the wire of the coil 30 and/or the resistance of the wire.

Further, as also discussed elsewhere in this document, in a preferred embodiment of the present invention, the magnet 20 comprises a magnet cup 21 and preferably further comprises a main magnet 22, a pole piece 23 and/or an auxiliary magnet 24. In this case, the one or more parameters include a wall thickness of the magnet cup 21.
Moreover, as also discussed elsewhere in this document, in a preferred embodiment of the present invention, the one or more parameters include a geometry of the spring 30.

Further, as also discussed elsewhere discussed in this document, the at least one predetermined characteristic of the actuator 100 may include a resonant frequency and/or an acceleration of the actuator 100. Accordingly, manufacturing the actuator may be done such that particular requirements for the final product, for example in accordance with a specific application, can be met. Moreover, this can be done in a flexible manner without requiring any particular modifications of the manufacturing process and involves no additional steps and/or increased costs. Hence, a particular flexible, versatile and cost-effective method of manufacturing an actuator according to a broad range of characteristics can be provided.

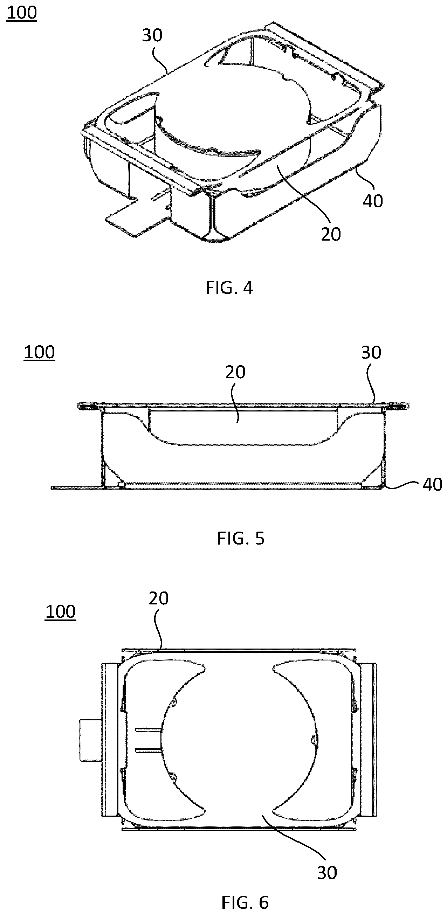

Figure 4 shows a schematic top view of an actuator 100 manufactured by a method according to an embodiment of the present invention.

Specifically, in Figure 4 a final product of the method of manufacturing an actuator 100 discussed elsewhere in this document is illustrated. It is really understood that not all elements of the actuator 100 illustrated in, for example Figure 1, can be seen in this figure. For example, the "inner parts" of the magnet, e.g., the main magnet 22, the pole piece 23, and the auxiliary magnet 24, as far as present, are not visible in this illustration.

Visible is however the housing 40, the spring 30 resting on top of the two contact parts 41 and fixated between the two contact parts 41 and the two bending parts 42. Also the magnet 20 as a whole can be recognized in Figure 3.

Figure 5 shows a schematic side view of an actuator 100 manufactured by a method according to an embodiment of the present invention.

As Figure 5 shows a side view of the actuator 100, similar to Figure 4, not all elements comprised in the actuator 100 can be seen. Visible are, however, at least the housing 40, the spring 30, and the magnet 20 of the actuator 100. As can be understood, Figure 5 shows an actuator in an finished state.

Figure 6 shows a schematic top view of an actuator 100 manufactured by a method according to an embodiment of the present invention.

As Figure 6 shows a top view of the actuator 100, similar to Figures 4 and 5, not all elements comprised in the actuator 100 can be seen, Visible are, however, at least the housing 40 and the spring 30 of the actuator 100.

Taken together, Figures 1, 2 and 4-6 can be understood as a relating the same or substantially the same actuator 100 according to the present invention manufactured by a method according to the present invention. In other words, according to an embodiment of the present invention, there is provided an actuator 100 manufactured according to a method of manufacturing an actuator 100 discussed within this document.

Although detailed embodiments have been described, these only serve to provide a better understanding of the invention defined by the independent claims and are not to be seen as limiting.

## Claims

1. A method of manufacturing an actuator comprising a coil, a magnet and a spring, the method comprising the steps of:
modelling one or more parameters of at least one of the coil, the magnet and the spring based on at least one predetermined characteristic of the actuator;
assembling the coil, the magnet and the spring in accordance with the one or more parameters;
providing a sheet metal housing comprising at least one contact part and at least one bending part adjacent to the at least one contact part;
attaching the coil to the sheet metal housing;
attaching a printed circuit board to the sheet metal housing;
attaching the magnet to a bottom surface of the spring;
placing the spring on the at least one contact part of the sheet metal housing; and
bending the at least one bending part onto a portion of the spring that rests on the at least one contact part of the sheet metal housing.

2. The method of manufacturing an actuator according to claim 1, further comprising the steps of:
providing a sheet metal strip;
stamping the sheet metal strip into a sheet metal blank;
and
bending the sheet metal blank into the sheet metal housing.

3. The method of manufacturing an actuator according to claim 1 or 2, wherein
the housing comprises a bottom surface and four side surfaces attached to the bottom surface, and
the at least one contact part is attached to one of the side surfaces.

4. The method of manufacturing an actuator according to any one of claims 1 to 3, wherein the spring is made of sheet metal.

5. The method of manufacturing an actuator according to any one of claims 1 to 4, wherein the coil is glued to the sheet metal housing.

6. The method of manufacturing an actuator according to any one of claims 1 to 5, wherein the printed circuit board is glued to the sheet metal housing.

7. The method of manufacturing an actuator according to any one of claims 1 to 6, wherein a connecting wire of the coil is soldered to the printed circuit board.

8. The method of manufacturing an actuator according to any one of claims 1 to 7, wherein the printed circuit board is attached to the bottom surface of the sheet metal housing.

9. The method of manufacturing an actuator according to any one of claims 1 to 8, wherein the magnet is attached to the bottom surface of the spring by pressing or soldering.

10. The method of manufacturing an actuator according to any one of claims 1 to 9, wherein
the coil comprises a wire, preferably further comprises a core, and
the one or more parameters include a winding number of the wire of the coil and/or the resistance of the wire.

11. The method of manufacturing an actuator according to any one of claims 1 to 10, wherein
the magnet comprises a magnet cup, preferably further comprises a main magnet, a pole piece and/or an auxiliary magnet, and
the one or more parameters include a wall thickness of the magnet cup.

12. The method of manufacturing an actuator according to any one of claims 1 to 11, wherein the one or more parameters include a geometry of the spring.

13. The method of manufacturing an actuator according to any one of claims 1 to 12, wherein the at least one predetermined characteristic of the actuator includes a resonant frequency and/or an acceleration of the actuator.

14. An actuator manufactured according to the method of any one of claims 1 to 13.

## Amended claims

### Amended claims in accordance with Rule 137(2) EPC.

1. A method of manufacturing a voice coil actuator (100) comprising a coil (10), a magnet (20), a spring (30) and a printed circuit board, wherein the spring (30) is configured to be set in vibration by movement of the magnet (20) upon exertion to a magnetic field generated by energizing the coil (10), wherein the vibration constitutes the haptic signal and/or haptic feedback provided by the voice coil actuator (100), the method comprising the steps of:
modelling one or more parameters of at least one of the coil (10), the magnet (20) and the spring (30) based on at least one predetermined characteristic of the voice coil actuator (100);
assembling the coil (10), the magnet (20) and the spring (30) in accordance with the one or more parameters;
providing a sheet metal housing (40) comprising at least one contact part and at least one bending part adjacent to the at least one contact part;
attaching the coil (10) to the sheet metal housing inside the sheet metal housing;
attaching the printed circuit board for controlling a process of energizing the coil (10) to the sheet metal housing;
attaching the magnet (20) to a bottom surface of the spring (30);
placing the spring (30) on the at least one contact part of the sheet metal housing; and
bending the at least one bending part onto a portion of the spring (30) that rests on the at least one contact part of the sheet metal housing.

2. The method of manufacturing a voice coil actuator (100) according to claim 1, further comprising the steps of:
providing a sheet metal strip;
stamping the sheet metal strip into a sheet metal blank; and
bending the sheet metal blank into the sheet metal housing.

3. The method of manufacturing a voice coil actuator (100) according to claim 1 or 2, wherein
the housing comprises a bottom surface and four side surfaces attached to the bottom surface, and
the at least one contact part is attached to one of the side surfaces.

4. The method of manufacturing a voice coil actuator (100) according to any one of claims 1 to 3, wherein the spring (30) is made of sheet metal.

5. The method of manufacturing a voice coil actuator (100) according to any one of claims 1 to 4, wherein the coil (10) is glued to the sheet metal housing.

6. The method of manufacturing a voice coil actuator (100) according to any one of claims 1 to 5, wherein the printed circuit board is glued to the sheet metal housing.

7. The method of manufacturing a voice coil actuator (100) according to any one of claims 1 to 6, wherein a connecting wire of the coil (10) is soldered to the printed circuit board.

8. The method of manufacturing a voice coil actuator (100) according to any one of claims 1 to 7, wherein the printed circuit board is attached to the bottom surface of the sheet metal housing.

9. The method of manufacturing a voice coil actuator (100) according to any one of claims 1 to 8, wherein the magnet (20) is attached to the bottom surface of the spring (30) by pressing or soldering.

10. The method of manufacturing a voice coil actuator (100) according to any one of claims 1 to 9, wherein
the coil (10) comprises a wire, preferably further comprises a core, and
the one or more parameters include a winding number of the wire of the coil (10) and/or the resistance of the wire.

11. The method of manufacturing a voice coil actuator (100) according to any one of claims 1 to 10, wherein
the magnet (20) comprises a magnet cup (21), preferably further comprises a main magnet (22), a pole piece (23) and/or an auxiliary magnet (24), and
the one or more parameters include a wall thickness of the magnet cup (21).

12. The method of manufacturing a voice coil actuator (100) according to any one of claims 1 to 11, wherein the one or more parameters include a geometry of the spring (30) .

13. The method of manufacturing a voice coil actuator (100) according to any one of claims 1 to 12, wherein the at least one predetermined characteristic of the voice coil actuator (100) includes a resonant frequency and/or an acceleration of the voice coil actuator (100).

14. A voice coil actuator (100) manufactured according to the method of any one of claims 1 to 13.
